# EUROPEAN PATENT APPLICATION

(11) **EP 0 843 369 A1**
(43) Date of publication of application: **20.05.1998**
(21) Application number: 97119920.3
(22) Date of filing: 13.11.1997
(51) Int. Cl.: H01M 2/08, H01M 6/16

(54) **Barrel type non-aqueous electrolyte cell**

(30) Priority: 14.11.1996 JP 303342/96
(71) Applicant: ASAHI GLASS COMPANY LTD., Chiyoda-ku Tokyo 100 (JP); ELNA Company Ltd., Fujisawa-shi Kanagawa-ken (JP)
(72) Inventor: Ikeda, Katsuji, Asahi Glass Company Ltd., Yokohama-shi, Kanagawa (JP); Hiratsuka, Kazuya, Asahi Glass Company Ltd., Yokohama-shi, Kanagawa (JP); Matsumoto, Shinji, Elna Company Ltd., Fujisawa-shi, Kanagawa (JP)
(74) Representative: Müller-Boré & Partner Patentanwälte

(57) **Abstract**

A barrel type non-aqueous electrolyte cell, comprising a bottomed barrel type case made of a material composed mainly of aluminum, an anode and a cathode accommodated together with a non-aqueous electrolyte in the case and having a separator interposed therebetween, and a sealing member having an anode terminal and a cathode terminal and sealing an opening of the barrel type case, wherein the sealing member is made of a material which is a vulcanizate obtained by subjecting a copolymer comprising polymer units based on isobutylene and polymer units based on isoprene to peroxide vulcanization and/or resin vulcanization.

## Description

The present invention relates to primary and secondary cells of a non-aqueous electrolyte type containing a lithium salt.

Along with the progress in the electronic technology in recent years, down sizing, high performance and portability of electronic equipments have been advanced, and small sized light weight high performance cells have been employed as power sources of such electronic equipments. Especially, use of chargeable secondary cells has been advanced. Conventional secondary cells include, for example, a nickel cadmium cell and a nickel hydrogen cell. Recently, a lithium secondary cell or a lithium ion secondary cell employing a non-aqueous electrolyte has been used as a cell having a higher energy density.

However, such conventional cells are of the type wherein an anode, a cathode and an electrolyte are accommodated in a nickel-plated iron can or a stainless steel can as a case, and a complex sealing structure is employed such that the top of the case is sealed by a sealing plate provided with a safety valve mechanism for an over current cut-off mechanism. Therefore, down sizing and weight reduction have been difficult, and the requirements as a power source for small sized light weight electronic equipments can not adequately be satisfied.

Further, for the conventional cells, iron or stainless steel having high strength is processed into cans. Accordingly, also machines for their production are required to have high strength and high precision, thus leading to a high production cost. Further, the complex sealing structure requires a large number of parts and accordingly a high cost for the materials. Thus, it has been difficult to supply the cells inexpensively.

It has been attempted to reduce the size of cells. However, as the size is reduced, the processing tends to be difficult, and a trouble such as liquid leakage is likely to occur, whereby there has been a problem that the reliability tends to be low. Further, there is a limitation in the down sizing of the conventional safety valve mechanism or over current cut-off mechanism. Accordingly it has been obliged to reduce the size of the cell by reducing the size of the power generation element, whereby there has been a problem that the accommodation efficiency decreases, and the energy density decreases.

For an angular cell or the like, it has been attempted to employ laser sealing in order to avoid a decrease in the reliability due to the above mentioned problem in processing precision. However, such laser sealing has problems such that the cost for the production machine is high as compared with conventional mechanical sealing, and the time required for sealing per cell tends to be long.

It is an object of the present invention to improve the accommodating case and the sealing member for a cell of a non-aqueous electrolyte type containing a lithium salt to obtain a structure which makes down sizing and weight reduction possible and thereby to provide a non-aqueous electrolyte cell having high reliability and high productivity.

The present invention provides a barrel type non-aqueous electrolyte cell, comprising a bottomed barrel type case made of a material composed mainly of aluminum, an anode and a cathode accommodated together with a non-aqueous electrolyte in the case and having a separator interposed therebetween, and a sealing member having an anode terminal and a cathode terminal and sealing an opening of the barrel type case, wherein the sealing member is made of a material which is a vulcanizate obtained by subjecting a copolymer comprising polymer units based on isobutylene and polymer units based on isoprene to peroxide vulcanization and/or resin vulcanization.

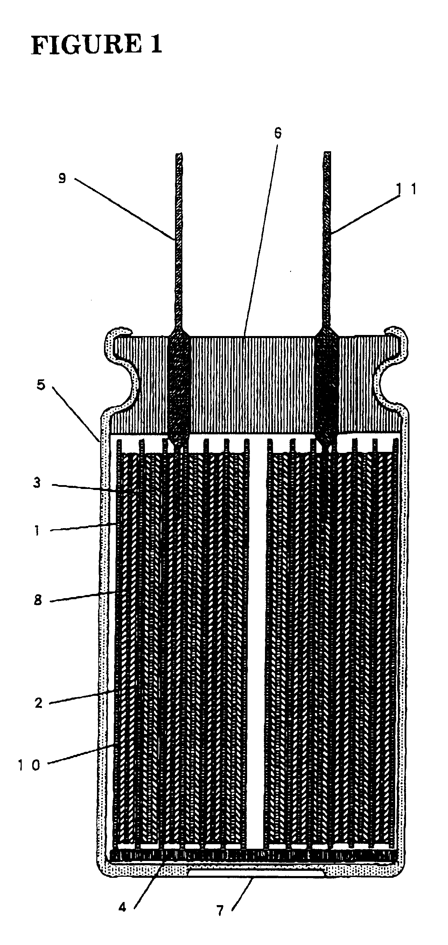

In the accompanying drawing, Figure 1 is a cross sectional view of the non-aqueous electrolyte cell according to the present invention.

Now, the present invention will be described in detail with reference to the preferred embodiments.

The material of the bottomed barrel type case in the present invention may, for example, be pure aluminum or an alloy composed mainly of aluminum. From the viewpoint of costs and strength, an aluminum alloy in the order of JIS 2000 or 3000 may also be used.

As the material of the sealing member in the present invention, a vulcanizate is used which is obtained by subjecting a copolymer comprising polymer units based on isobutylene and polymer units based on isoprene (hereinafter referred to as an isobutylene/isoprene copolymer) to peroxide vulcanizate and/or resin vulcanization. The vulcanization obtained by such vulcanization does not swell even in the solvent of the non-aqueous electrolyte containing a lithium salt, and its water permeability is low.

In the present invention, the polymer units based on isoprene are preferably contained in an amount of from 0.1 to 10 wt% in the isobutylene/isoprene copolymer. Further, to the isobutylene/isoprene copolymer, polymer units based on other monomer copolymerizable therewith, may be added. It is particularly preferred to subject a copolymer comprising polymer units based on isobutylene and polymer units based on isoprene to peroxide vulcanization in the presence of divinylbenzene, since it is thereby possible to increase the cross linking density during vulcanization. It is further preferred that the divinylbenzene is contained in an amount of from 0.01 to 30 wt% in this vulcanizate.

The isobutylene/isoprene copolymer subjected to peroxide vulcanization and/or resin vulcanization, is excellent in physical properties such as heat resistance, air tightness, chemical resistance and compression set. Accordingly, in the present invention, one subjected to peroxide vulcanization and/or resin vulcanization is used. As the vulcanizer for peroxide vulcanization, dicumyl peroxide may, for example, be mentioned. The vulcanizer for resin vulcanization is preferably a phenol resin or the like, and an alkylphenol formaldehyde resin or an N,N'-metaphenylenedimaleimide resin may, for example, be selected for use. The amount of the vulcanizer is preferably at a level of from 0.1 to 5 wt% in the isobutylene/isoprene copolymer.

By using the vulcanizate obtained by subjecting the above mentioned isobutylene/isoprene copolymer to peroxide vulcanization and/or resin vulcanization as a sealing member, it is possible to secure an adequate sealing property even for a secondary cell of a non-aqueous electrolyte type containing a lithium salt, which is expected to be used for a particularly long period of time.

The barrel type non-aqueous electrolyte cell of the present invention can be used as a primary or secondary cell. An element comprising an anode and a cathode having a separator interposed therebetween, and an electrolyte, are accommodated in a bottomed barrel type case, and the sealing member having an anode terminal and a cathode terminal, is fitted in the opening of the above barrel type case. It is preferred that a part of the contact portion between the side surface of the sealing member and the inner surface of the barrel type case, is constricted from the outer periphery towards the center of the barrel type case for hermetic sealing. In such a case, it is particularly preferred that the entire periphery is constricted in a plane which is perpendicular to the axial direction of the barrel type case.

The side surface of the sealing member and the inner surface of the barrel type case may not directly contact each other, and in order to improve the air tightness, sealing may be made by a layer made of e.g. a rubber such as EPDM which is interposed therebetween. In this specification, EPDM is a copolymer comprising polymer units based on ethylene, polymer units based on propylene and polymer units based on a diene. The thickness of the layer composed mainly of this EPDM is preferably from 10 µm to 1 mm, more preferably from 50 to 200 µm. The barrel type case in the present invention is composed mainly of aluminum, and its processing can be easily carried out.

With respect to the composition of EPDM, the propylene content is preferably from 20 to 50 wt%, more preferably from 20 to 35 wt%. EPDM may be used alone or may be used in the form of a blend containing other resin such as butyl rubber within a range of from 1 to 30 wt%. As a filler, ZnO, carbon black or the like may be contained in an amount of less than 30 wt%. Further, a crosslinking agent such as dicumyl peroxide may be contained in an amount of less than 10 wt%.

Further, as the solvent for the non-aqueous electrolyte of the barrel type non-aqueous electrolyte secondary cell of the present invention, a non-aqueous solvent having a boiling point of at least 150°C and a dielectric constant of at least 30, is preferably employed. Such a non-aqueous solvent may, for example, be at least one member selected from the group consisting of cyclic carbonates such as ethylene carbonate, propylene carbonate and butylene carbonate, cyclic lactones such as γ-butyrolactone and γ-valerolactone, ethylene glycol sulfite, sulfolane, dimethylsulfoxide, N-methylpyrrolidone, dimethylformamide and their derivatives.

Among them, ethylene carbonate (hereinafter referred to as EC) and propylene carbonate (hereinafter referred to as PC) are preferred from the viewpoint of the potential window and the dielectric constant. A solvent mixture comprising EC and PC is further preferred, since it is thereby possible to further increase the electrical conductivity at a low temperature. The blend proportions of EC and PC are not particularly limited. However, it is preferred that the volume ratio of EC/PC is within a range of from 70/30 to 40/60.

In the sealing structure of the barrel type non-aqueous electrolyte cell of the present invention, the resistance of the sealing member against the non-aqueous electrolyte containing a lithium salt and a solvent having a boiling point of at least 150°C and a dielectric constant of at least 30, is particularly high, whereby it is possible to further increase the air tightness without sacrificing the cell properties.

The lithium salt as a solute of the non-aqueous electrolyte in the present invention, may, for example, be LiClO₄, LiCF₃SO₃, LiSF₄, LiPF₆, LiAsF₆, LiSbF₆, LiCF₃CO₂, Li₂B₁₀Cl₁₀ or LiN(CF₃SO₂)₂. Particularly preferred is LiBF₄ or LiPF₆, since the electrical conductivity is high, and the potential window is wide. Further, various additives, solvents, etc. may be incorporated to the non-aqueous electrolyte in the present invention, for the purpose of improving the charging and discharging efficiency, the cycle properties and the high charging and discharging characteristics.

In the present invention, a thin wall portion where the wall thickness of the case is made thin, may be provided at least at a part of the bottom of the barrel case. Such a thin wall portion is capable of functioning as an explosion-preventive valve which acts safely against an increase of the internal pressure of the case due to e.g. over charging before explosion of the case, whereby safety can be secured.

The shape of the thin wall portion is not particularly limited. However, it is designed to act preferably within an internal pressure range of from 3 to 10 kg/cm², more preferably from 4 to 7 kg/cm², since it is expected to act as a safety valve at a level lower than the durable strength of the case composed mainly of aluminum. A specific shape may, for example, be such that two notch lines, each having a width of from 0.1 to 0.3 mm and a length corresponding to not longer than 4/5 of the diameter of the bottom of the case, are formed to cross each other, so that the thickness of the thin wall portion would be from 0.05 to 0.3 mm, whereby the above condition can be satisfied.

In the present invention, air tightness can be further increased by interposing a layer composed mainly of EPDM between the anode terminal and the sealing member and between the cathode terminal and the sealing member, which is preferred since leakage of the electrolyte through a clearance can thereby be prevented. The thickness of such a layer composed mainly of EPDM is preferably from 10 µm to 1 mm, more preferably from 50 to 200 µm.

To this layer, a vulcanizate of EPDM or carbon black may further be incorporated as a component other than EPDM.

Now, the present invention will be described in further detail with reference to examples. However, it should be understood that the present invention is by no means restricted to such specific examples.

To study the material for the sealing member, a test of the stability against the electrolyte was carried out with respect to the following various rubbers, as shown in Test 1. Then, using these rubbers as sealing members, nonelectrolyte secondary cells of Examples (Examples 1 to 5 and 8) and Comparative Examples (Examples 6 and 7) were prepared, Tests 2 to 4 were carried out. Figure 1 shows a cross sectional view of a non-aqueous electrolyte secondary cell in each example.

### Rubber compositions

### Sample A:

Styrene butadiene rubber (styrene: 23.5 wt%): 100 parts by weight, carbon black: 50 parts by weight, zinc white: 5 parts by weight, stearic acid: 1.5 parts by weight: sulfur (vulcanizer): 1.75 parts by weight

### Sample B:

Isobutylene-isoprene copolymer (isoprene: 3 wt%): 100 parts by weight, mercaptobenzothiazole: 1 part by weight: tetramethylthiuraldisulfide: 1 part by weight, sulfur (vulcanizer): 2 parts by weight; zinc white: 5 parts by weight, stearic acid: 1 part by weight, carbon black: 40 parts by weight, precipitated calcium carbonate light: 40 parts by weight

### Sample C:

Isobutylene-isoprene copolymer (isoprene: 3 wt%): 100 parts by weight, paraquinone dioxime (vulcanizer): 2 parts by weight, dibenzothiazyldisulfide: 4 parts by weight, zinc white: 5 parts by weight, stearic acid: 1 part by weight, carbon black: 40 parts by weight, precipitated calcium carbonate light: 40 parts by weight

### Sample D:

Isobutylene-isoprene copolymer (isoprene: 3 wt%): 100 parts by weight, dicumyl peroxide 40% product (vulcanizer): 2 parts by weight, divinylbenzene: 1.5 parts by weight, zinc white: 5 parts by weight, stearic acid: 1 part by weight, carbon black: 40 parts by weight, precipitated calcium carbonate light: 40 parts by weight

### Sample E:

Isobutylene-isoprene copolymer (isoprene: 3 wt%): 100 parts by weight, N,N'-metaphenylenedimaleimide resin (vulcanizer): 12 parts by weight, brominated butyl rubber (bromine content: 3.5%): 10 parts by weight, zinc white: 5 parts by weight, carbon black: 40 parts by weight, precipitated calcium carbonate light: 40 parts by weight

### Sample F:

Isobutylene-isoprene copolymer (isoprene: 3 wt%): 100 parts by weight, N,N'-metaphenylenedimaleimide resin (vulcanizer): 10 parts by weight, brominated butyl rubber (bromine content: 3.5%): 8 parts by weight, dicumyl peroxide (vulcanizer) 40% product: 2 parts by weight, divinylbenzene: 1.5 parts by weight, stearic acid: 1 part by weight, zinc white: 5 parts by weight, carbon black: 40 parts by weight, precipitated calcium carbonate light: 40 parts by weight

### Sample G:

Isobutylene-isoprene copolymer (isoprene: 3 wt%): 100 parts by weight, dicumyl peroxide 40% product (vulcanizer): 2 parts by weight, zinc white: 5 parts by weight, stearic acid: 1 part by weight, carbon black: 40 parts by weight, precipitated calcium carbonate light: 40 parts by weight

### TEST 1

A test specimen of each of the above Samples was immersed in PC having LiBF₄ dissolved at a concentration of 1 mol/l and stored in a constant temperature tank of 60°C for 1000 hours, whereupon the weight change of each Sample was measured. The results are shown in Table 1.

When the vulcanizate obtained by an isobutylene-isoprene-divinylbenzene copolymer and the styrene-butadiene rubber (Sample A) are compared, it is evident that the weight change of the styrene-butadiene rubber is very large. Further, when comparison is made on the basis of the vulcanization condition of the isobutylene-isoprene-divinylbenzene copolymer, it is evident that no substantial weight change is observed with the one subjected to peroxide vulcanization and/or resin vulcanization as compared with the one subjected to sulfur vulcanization or quinoid vulcanization. The smaller the weight change, the less absorption of PC, and accordingly the better and more stable the sealing property, when such a material is used as the sealing member. Accordingly, Samples D, E, F and G are expected to be preferred as sealing members.

**Table 1**

| Name of Sample | Weight change |
|---|---|
| Sample A | 81.3% |
| Sample B | 17.2% |
| Sample C | 12.1% |
| Sample D | 0.3% |
| Sample E | 0.2% |
| Sample F | 0.2% |
| Sample G | 1.2% |

### EXAMPLE 1

85g of LiMn₂O₄ as an active substance, 9g of graphite as a conductive material and 6g of polyvinylidene fluoride as a binder were dispersed in 100g of N-methyl-2-pyrrolidone, and this dispersion was coated on each side of an anode current collector 10 made of a hard aluminum foil having a thickness of 20 µm. The coated layer was rolled to form an anode, thereby to obtain an anode sheet having the anode current collector and the anode integrated and having a thickness of 100 µm.

Then, 47g of artificial graphite as a carbon material and 3g of polyvinylidene fluoride as a binder were dispersed in 50g of N-methyl-2-pyrrolidone. This dispersion was coated on each side of a cathode current collector 8 made of a nickel foil having a thickness of 20 µm. The coated layer was rolled to form a cathode 1, thereby to obtain a cathode sheet having the cathode current collector and the cathode integrated and having a thickness of 80 µm.

An aluminum lead terminal 11 was attached to the anode 2 thus prepared, and a nickel lead terminal 9 was attached to the cathode 1. Then, the anode 2 and the cathode 1 were dried at 150°C for 4 hours in dry air having a dew point of -50°C. Then, in an argon atmosphere having a dew point of -60°C, the anode and the cathode having a separator 3 made of a polypropylene microporous film having a thickness of 25 µm interposed therebetween, were rolled into an element.

To this element, an electrolyte having LiBF₄ dissolved at a concentration of 1 mol/l in a mixed solvent of EC and PC in a volume ratio of 1:1, was impregnated. The amount of the electrolyte impregnated, was within a range of from 0.3 to 0.4 g per element.

Then, into an aluminum cylindrical case 5 having a diameter of 10 mm and a length of 25 mm and provided, at its bottom, with a thin wall portion 7 which ruptures under a pressure of 5 kg/cm², an insulating plate 4 made of polypropylene was inserted, and the above element was placed thereon. This thin wall portion 7 was such that two notches having a width of 0.2 mm and a length of about 7.5 mm were formed to cross at the center of the bottom of the barrel type case 5, and the wall thickness of the thin wall portion 7 was about 0.2 mm.

Then, as a sealing member 6, Sample D molded to have a diameter of 9.5 mm and a thickness of 4 mm was fit in the opening of the cylindrical case 5, and a part of the portion where the side surface of the sealing member and the inner surface of the case were in contact with each other, was constricted from the outer periphery of the case towards the center to hermetically seal the case, thereby to obtain a cell.

### EXAMPLE 2 and 3

A cell was prepared in the same manner as in Example 1 except that as the sealing member, Sample E (Example 2) or Sample F (Example 3) was used.

### EXAMPLE 4

A cell was prepared in the same manner as in Example 1 except that as the sealing member, Sample F was used, and an EPDM layer having a thickness of 50 µm was provided at the contact portion between the anode terminal and the sealing rubber and between the cathode terminal and the sealing rubber and at the contact portion between the sealing member and the aluminum case.

The above EPDM layer was obtained by coating and drying a solution having 10 wt% of EPDM (tradename: EP51, manufactured by Japan Synthetic Rubber Co., Ltd., propylene content: 26 wt%) dissolved in toluene.

### EXAMPLE 5

A cell was prepared in the same manner as in Example 1 except that an aluminum cylindrical case having a diameter of 10 mm and a length of 25 mm and having no thin wall portion provided, was used.

### EXAMPLES 6 to 8

A cell was prepared in the same manner as in Example 1 except that as the sealing member, Sample A (Example 6) Sample B (Example 7) or Sample G (Example 8) was used.

### TEST 2

15 cells were prepared in each of Examples 1 to 8. Constant voltage-constant current charging was carried out for 4 hours under conditions of 4.2 V and 25 mA, and then discharging was carried out at a constant current of 25 mA to 2.5 V. The average discharge capacity of the respective 15 cells at this initial stage was as shown in Table 2.

Among the 15 cells subjected to the above initial charging and discharging, 5 cells were again subjected to constant voltage-constant current charging for 4 hours at 4.2 V and 25 mA and then stored in a constant temperature tank of 60°C for 20 days, whereupon the weight change of each cell was measured and liquid leakage was examined. The average value of the weight changes of the 5 cells, and the number of cells which underwent liquid leakage are shown in Table 2.

**Table 2**

| | Initial discharge capacity (mAh) | Discharge capacity after storage at 60°C for 20 days (mAh) | Weight change after storage at 60°C for 20 days (mg) | Number of cells which underwent liquid leakage |
|---|---|---|---|---|
| Example 1 | 61.3 | 46.4 | -0.3 | 0 |
| Example 2 | 61.5 | 47.1 | -0.2 | 0 |
| Example 3 | 61.2 | 46.8 | -0.2 | 0 |
| Example 4 | 61.0 | 48.7 | -0.1 | 0 |
| Example 5 | 61.9 | 48.0 | -0.2 | 0 |
| Example 6 | 58.7 | 22.3 | -50.2 | 5 |
| Example 7 | 61.1 | 35.1 | -20.6 | 4 |
| Example 8 | 61.5 | 47.0 | -1.5 | 0 |

With the cylindrical non-aqueous electrolyte secondary cells of Examples 1 to 5 and Example 8, no substantial weight reduction was observed, and no liquid leakage occurred. Whereas, with the cells of Examples 6 and 7, the weight reduction was substantial, and liquid leakage took place.

### TEST 3

Among the 15 cells subjected to the initial charging and discharging in test 2, 5 cells were subjected to constant voltage-constant current charging for 4 hours at 4.2 V and 25 mA, followed by constant current discharging at 25 mA to 2.5 V. This charging and discharging cycle was repeated for 100 cycles in a constant temperature tank of 45°C. After the 100 cycles, the average value of the weight changes, the average value of the discharge capacities and the average value of the initial capacities of the 5 cells, and the number of cells which underwent liquid leakage, are shown in Table 3.

**Table 3**

| | Initial discharge capacity (mAh) | Discharge capacity after 100 cycles (mAh) | Weight change after 100 cycles (mg) | Number of cells which underwent liquid leakage |
|---|---|---|---|---|
| Example 1 | 61.3 | 49.2 | -0.2 | 0 |
| Example 2 | 61.5 | 49.1 | -0.1 | 0 |
| Example 3 | 61.2 | 49.4 | -0.1 | 0 |
| Example 4 | 61.0 | 48.7 | -0.1 | 0 |
| Example 5 | 61.9 | 49.7 | -0.1 | 0 |
| Example 6 | 58.7 | 12.3 | -41.5 | 5 |
| Example 7 | 61.1 | 25.5 | -15.6 | 3 |
| Example 8 | 61.5 | 49.0 | -0.6 | 0 |

With the cylindrical non-aqueous electrolyte secondary cells of Examples 1 to 5 and Example 8, the weight change is little after 100 cycles of the charging and discharging test at 45°C, and no liquid leakage was observed. Whereas, with the cells of Examples 6 and 7, the weight change was substantial, and the liquid leakage took place.

### TEST 4

To examine the valve action due to overcharging, among the 15 cells subjected to the initial charging and discharging, 5 cells were subjected to constant voltage-constant current charging for 10 hours at 10 V and 100 mA, whereby the state of each cell was observed. The number of cells which raptured, the number of cells wherein the safety valves properly functioned and the state of the cells are shown in Table 4.

**Table 4**

| | Number of ruptured cells | Number of cells in which the valves properly functioned | State |
|---|---|---|---|
| Example 1 | 0 | 5 | Valve functioned properly in from 2.5 to 3.0 hours in all cases. |
| Example 2 | 0 | 5 | Valve functioned properly in from 2.5 to 3.0 hours in all cases. |
| Example 3 | 0 | 5 | Valve functioned properly in from 2.5 to 3.0 hours in all cases. |
| Example 4 | 0 | 5 | Valve functioned properly in from 2.5 to 3.0 hours in all cases. |
| Example 5 | 5 | 0 | The rolled element sprang out together with the sealing member in from 4.0 to 4.5 hours. |
| Example 6 | 2 | 0 | A large amount of liquid leakage from clearances between the sealing member and the can and between the sealing member and each terminal, was observed in from 1.5 to 2.5 hours. in two cells, the valves functioned after 3.5 hours. |
| Example 7 | 0 | 5 | Valve functioned properly in from 2.5 to 3.0 hours in all cases. In all of while cells, liquid leakage from a clearance between the sealing member and the can and from a clearance between the sealing member and each terminal, was absorbed. |
| Example 8 | 0 | 5 | Valve functioned properly in from 2.5 to 3.0 hours in all cases. |

In Examples 1 to 4 and 8 wherein thin wall portions were formed, valves functioned properly by overcharging in all cases. In Example 5 wherein no thin wall portion was formed, the rolled element sprung out together with the sealing member, and the cell ruptured, but no smoke generation or firing occurred. In Examples 6 and 7, a large amount of liquid leakage occurred despite the fact that the thin wall portions capable of functioning as safety valves, were formed.

With the barrel type non-aqueous electrolyte cell of the present invention, the weight of the case itself is light, and the weight energy density can be made high accordingly. Further, sealing can readily be carried out without requiring a high strength sealing machine, and the productivity is accordingly high. Such effects are substantial particularly for small sized barrel type non-aqueous electrolyte secondary cells.

Further, even in a case where a solvent having a boiling point of at least 150°C and a dielectric constant of at least 30 is used as the solvent for the electrolyte, it is possible to present a cylindrical non-aqueous electrolyte primary cell and a cylindrical non-aqueous electrolyte secondary cell, which are excellent in reliability, because of high solvent resistance of the sealing member. Further, a thin wall portion where the wall thickness is made thin, can be readily provided at the bottom of the case, whereby the safety can be increased.

## Claims

1. A barrel type non-aqueous electrolyte cell, comprising a bottomed barrel type case made of a material composed mainly of aluminum, an anode and a cathode accommodated together with a non-aqueous electrolyte in the case and having a separator interposed therebetween, and a sealing member having an anode terminal and a cathode terminal and sealing an opening of the barrel type cage, wherein the sealing member is made of a material which is a vulcanizate obtained by subjecting a copolymer comprising polymer units based on isobutylene and polymer units based on isoprene to peroxide vulcanization and/or resin vulcanization.

2. The barrel type non-aqueous electrolyte cell according to Claim 1, wherein the sealing member is made of a material which is a vulcanizate obtained by subjecting a copolymer comprising polymer units based on isobutylene and polymer units based on isoprene to peroxide vulcanization in the presence of divinylbenzene.

3. The barrel type non-aqueous electrolyte according to Claim 1 or 2, wherein the vulcanizer for the copolymer is at least one member selected from the group consisting of dicumyl peroxide, an alkylphenolformaldehyde resin and an N,N'-metaphenylenedimaleimide resin.

4. The barrel type non-aqueous electrolyte cell according to any one of Claims 1 to 3, wherein the polymer units based on isoprene are contained in an amount of from 0.1 to 10 wt% in the vulcanizate of a copolymer comprising polymer units based on isobutylene and polymer units based on isoprene.

5. The barrel type non-aqueous electrolyte cell according to any one of Claims 2 to 4, wherein the divinylbenzene is contained in an amount of from 0.01 to 30 wt% in the vulcanizate of a copolymer comprising polymer units based on isobutylene and polymer units based on isoprene and divinylbenzene.

6. The barrel type non-aqueous electrolyte cell according to any one of Claims 1 to 5, wherein the shape of the barrel type case is cylindrical, and a part of the contact portion between the side surface of the sealing member and the inner surface of the barrel type case, is constricted from the outer periphery towards the center of the barrel type case.

7. The barrel type non-aqueous electrolyte cell according to any one of Claims 1 to 6, wherein the solvent for the non-aqueous electrolyte has a boiling point of at least 150°C and a dielectric constant of at least 30.

8. The barrel type non-aqueous electrolyte cell according to Claim 7, wherein the solvent for the non-aqueous electrolyte is a solvent mixture of ethylene carbonate and propylene carbonate.

9. The barrel type non-aqueous electrolyte cell according to any one of Claims 1 to 8, wherein a layer composed mainly of EPDM is disposed at the contact portion between the side surface of the sealing member and the barrel type case.

10. The barrel type non-aqueous electrolyte cell according to any one of Claims 1 to 9, wherein the barrel type case has, at least at a part of its bottom, a thin wall portion where the wall thickness of the case is made thin.
